**Europäisches Patentamt**

**European Patent Office**

**Office européen des brevets**

(19)

(11) Publication number : **0 520 055 B1**

(12) # EUROPEAN PATENT SPECIFICATION

(45) Date of publication of patent specification :
**20.04.94 Bulletin 94/16**

(51) Int. Cl.$^5$ : **B01J 20/28, B01J 20/04**

(21) Application number : **92902237.4**

(22) Date of filing : **09.01.92**

(86) International application number :
**PCT/GB92/00048**

(87) International publication number :
**WO 92/11932 23.07.92 Gazette 92/19**

(54) **ABSORBENTS.**

(30) Priority : **11.01.91 EP 91300183**

(43) Date of publication of application :
**30.12.92 Bulletin 92/53**

(45) Publication of the grant of the patent :
**20.04.94 Bulletin 94/16**

(84) Designated Contracting States :
**AT BE CH DE DK ES FR GB GR IT LI NL SE**

(56) References cited :
**EP-A- 0 278 535**
**US-A- 4 458 030**
**US-A- 4 656 156**

(73) Proprietor : **JOSEPH CROSFIELD & SONS LTD.**
**Bank Quay**
**Warrington, Cheshire, WA5 1AB (GB)**

(72) Inventor : **COCKETT, Keith Robert Fraser**
**6 Tunnel End; Preston-on-the-Hill**
**Via Warrington, Cheshire WA5 4JX (GB)**
Inventor : **CONCANNON, Martin**
**35 Grange Farm Crescent, West Kirby**
**Wirral, Merseyside L48 9YD (GB)**
Inventor : **WEBB, Maurice**
**117 Green Lane, Vicars Cross**
**Chester, Cheshire CH3 5LD (GB)**

(74) Representative : **Hugot, Alain**
**Patent Division, Colworth House**
**Sharnbrook, Bedford MK44 1LQ (GB)**

EP 0 520 055 B1

EP 0 520 055 B1

## Description

### Field of the Invention

This invention relates to composite materials intended for use as absorbents and comprising hydrotalcite-like material.

### Background to the Invention

The absorption properties of hydrotalcite-like materials are characterised in the literature. When using any absorbent, for example in absorbing metal ions or dyes, it is essential to ensure the absorbent is used efficiently while retaining the desired absorption characteristics.

### General description of the invention

Hydrotalcite-like materials are absorbents which, while well documented as absorbents, do not always exhibit the efficiency required for economic use in some applications.

This reduced efficiency follows from the slow rate of diffusion of absorbed material through the hydrotalcite-like product particles to active sites in the particle interior. The present invention provides a method of preparing a composite material in which a hydrotalcite-like material is provided with improved accessibility by being formed in the presence of a matrix material. Thus the composite material comprises hydrotalcite-like material formed in situ and deposited on a matrix material. The chemical and physical form of the matrix, on which the hydrotalcite-like material is formed in situ, will be dependent upon the intended end use of the composite. The matrix can be inert or capable of providing a complementary function, e.g. absorption. Thus, for detergent compositions, which will usually be in particulate form, the matrix may be selected from:-

i) zeolites, which would provide a detergency building function;

ii) clays, which would provide absorbent properties; and

iii) silicas, capable of providing, e.g. anticorrosion in the wash liquor.

A form of absorbent suitable for continuous contact with a liquid medium has the matrix surface in the shape of a tube on the surface of which is deposited hydrotalcite-like material. The medium carrying the absorbate would then be passed down the tube in a continuous stream. A bundle of such tubes could be used to increase the capacity and this bundle may be formed as a unitary body. Examples of a medium for which this form of matrix would be suitable are effluents and solutions of dyes or suspensions of pigments from textile dyeing. Appropriate matrices for these media would be silicas, clays, other filter aids and ceramic bodies. The absorbent composite material, when in the form of particles, could be retained in a cartridge through which the medium is passed, or in a sachet which allows the medium to pass through the sachet walls and contact the composite material within.

The invention thus includes composite materials comprising i) hydrotalcite-like materials deposited on the external surface of matrix particles whose size is chosen to meet the application requirements or, ii) hydrotalcite-like material deposited within pores or channels of a porous particle or monolithic matrix.

The hydrotalcite-like material would normally be present in a weight ratio of 10:90 to 90:10 with respect to the matrix material.

The materials used for the matrix may be inert, or may also provide a second function e.g. complementary absorbency. This latter can be provided by silicas, clays, aluminosilicates and ion exchange materials.

The integrity of the composite may be improved with the aid of binders, e.g. silicate or organic polymers to promote cohesion.

The invention extends to a method of forming the composite material wherein the matrix material is placed in an aqueous medium, precursors for the hydrotalcite-like material are reacted in the medium to deposit the hydrotalcite-like product on the matrix and the composite material recovered. The product composite may, if in particulate form, require comminution, e.g. in an air mill, to provide the desired size range.

The effective absorbent in the composite material is a hydrotalcite-like material, such term includes the calcined material.

Thus, the present invention utilises anion exchange materials related to a compound of the formula $Mg_6Al_2(OH)_{16}CO_3.4H_2O$ known as hydrotalcite, and for convenience referred to hereinafter as hydrotalcite-like materials.

The hydrotalcite-like materials useful as absorbents are described by formula I below:

$$M_{k+m} N_{n+p} (OH)_2 A_z^{y-} x.H_2O$$

where:

2

M is any 1+ or 2+ cation or combination thereof

N is any 3+ or 4+ cation or combination thereof

k is the sum of the individual mole fractions of the 1+ cations

m is the sum of the individual mole fractions of the 2+ cations

n is the sum of the individual mole fractions of the 3+ cations

p is the sum of the individual mole fractions of the 4+ cations where either but not both of k and m or n and p can be zero and k+m+n+p=1.

$A_z{}^{y-}$ is any anion of charge y- and mole fraction z, or combination of anions of similar or differing y- and k+2m+3n+4p-2-zy=0 and x can range from 1 to 100.

Examples of the cations M in the above formula are $Li^+$, $Mg^{2+}$, $Zn^{2+}$, $Fe^{2+}$, $Cu^{2+}$, $Sn^{2+}$, $Ca^{2+}$ and $Sr^{2+}$. Suitable N cations include $Al^{3+}$, $Fe^{3+}$, $Ti^{4+}$ and $Sn^{4+}$.

Preferred divalent cations are $Zn^{2+}$, $Cu^{2+}$ or $Mg^{2+}$ or a combination of these ions, or a combination with other divalent cations.

The anion A may be an inorganic or organic anion. Preferred inorganic anions A are $Cl^-$, $NO_3^-$, $SO_4^{2-}$, $CO_3^{2-}$ and $OH^-$. Examples of organic anions are carboxylate ions such as citrate and stearate.

Examples of hydrotalcite-like materials of this invention are:-

$$Zn_{16} Al_2 (OH)_{36} (Cl_2)\, xH_2O$$
$$Mg_6 Al_2 (OH)_{16} (NO_3)_2\, xH_2O$$
$$Cu_{16} Al_2 (OH)_{36} (Cl_2)\, xH_2O$$

Preparation of hydrotalcite-like compounds is known and has been described in a number of publications including Solid State Ionics 22 (1986) pages 135-141 where there is published a paper by Walter T Reichle entitled "Synthesis of Anionic Clay Minerals (Mixed Metal Hydroxides, Hydrotalcite)" and Chemtech (January 1986) pages 58-63 where there is published a paper by Walter T Reichle entitled "Anionic Clay Minerals".

A zinc/aluminium hydrotalcite-like material useful in the present invention may be prepared in one of the following ways or in other ways known in the art:

1. A 1 mol $dm^{-3}$ solution of an 8:1 molar ratio of zinc chloride and aluminium chloride was prepared. To this a 2 mol $dm^{-3}$ solution of sodium hydroxide was added until the original pH of the chloride solution had been increased from around 3 to pH 6.75. This resulted in the formation of a white gel-like precipitate which was separated by centrifuging. The precipitate was then washed by suspension in demineralised water followed by centrifuging. This washing process was repeated several times. The gel was then dried at 80°C to 100°C and ground to a fine powder.

2. A 1 mol $dm^{-3}$ solution of an 8:1 molar ratio of zinc chloride and aluminium chloride was prepared and simultaneously pumped into a 5 litre beaker, fitted with a stirrer, along with a 5 mol $dm^{-3}$ solution of sodium hydroxide. The rate of addition of sodium hydroxide was varied to maintain a pH of 6.5 in the reaction mixture. The resulting gel was separated and washed as described above. Particles of the washed precipitate were then dried in different ways:-

a) spray dried;

b) slurried in alcohol, filtered and oven dried at 50°C. The resulting precipitate was then hammer milled to form a fine powder;

c) slurried in nonionic surfactant (Synperonic A7 ex ICI) filtered and oven dried at 50°C. The resulting precipitate was then hammer milled to form a fine powder.

A magnesium/aluminium hydrotalcite-like material useful in the present invention may be prepared in the following way or in other ways known in the art.

To 98 litres of water 19.5 kg of sodium hydroxide was added followed by 25kg of magnesium nitrate and 18.3kg of aluminium nitrate dissolved in 73 litres of water to give a Mg:Al molar ratio of 3:1. The nitrate solution was added over a period of 30 minutes with stirring. The solution was heated at 90°C to 100°C for 2 hours. The resulting precipitate was filtered and washed. The precipitate was treated as follows:-

i) a sample was resuspended in water to give a 10% solids slurry;

ii) a sample was spray dried; and

iii) a sample was oven dried at approximately 120°C and micronised using a fluid energy mill.

It has been found that the morphology of hydrotalcite-like materials is dependent on their method of preparation. Especially preferred are methods of preparation which give rise to porous materials such as spray drying.

<u>Literature</u>

Physical admixture of hydrotalcites with other materials is known from EPA 0278535 (Akzo), US 4656156 (Alcoa) and US 4458030 (Kyowa).

Specific description of the invention

Examples of the composite materials will now be described to illustrate but not limit the invention.

EXAMPLES I AND II

For these examples silica (Neosyl TS, obtainable from Crosfield Chemicals of Warrington, England with APS about 8 micron) was selected as the matrix material. The amounts of metal salts required for the hydrotalcite were calculated such that the final ratio by weight of hydrotalcite:silica was 25:75. The silica was slurried in water and two separating funnels placed above the beaker such that the metal salts and alkali solution (5M NaOH) could be added simultaneously to the slurry. The slurry was stirred at all times and the pH constantly monitored. Demineralised water was used throughout. Two separate preparations were undertaken:-

I. A Zn Al hydrotalcite was prepared using a mixture of zinc chloride and aluminium chloride, Zn/Al molar ratio 8:1. The pH was kept constant at 6.5. The HT/silica composite thus prepared would have an exchangeable chloride anion.

II. A Mg Al hydrotalcite was prepared using a mixture of magnesium nitrate and aluminium nitrate, Mg/Al molar ratio 3:1. The pH was kept constant at 10. The HT/silica composite thus prepared would have an exchangeable nitrate anion.

Both samples were aged at 80°C for 2 hours after precipitation of the hydrotalcite. The samples were filtered, washed twice (demineralised water) and dried in the oven at 50°C. A small laboratory hammer mill was used to mill the samples which were then sieved in an 80 micron sieve to remove the larger particles, followed by sieving on a 56 micron air swept sieve to remove any fines. This gave a narrow particle size fraction in the range 56-80 micron which was used in subsequent kinetic experiments.

Examples III and IV were MgAl and ZnAl hydrotalcite respectively prepared as described previously in the absence of a matrix material.

The relative performance of the hydrotalcite samples was assessed by determining the rate of colorant adsorption as determined by measuring the absorbance of filtered samples of liquid, compared to a blank, at time intervals.

A solution in demineralised water of 1 g/l nonionic surfactant (Synperonic A7 obtainable from ICI Limited of England), 0.01 mol dm$^3$ sodium chloride and 0.01 g/l dyestuff (Direct Red 80: CI 35780) was prepared. 200 ml of the solution was placed in a water bath and maintained at a temperature of either 25°C or 40°C. The solution was stirred at all times. 5 ml samples were withdrawn at timed intervals and filtered through a 0.45 µM Millipore filter. The absorbance of each sample was determined against a water/nonionic/NaCl standard at 525 nm as measured on a uv/visible spectrophotometer this being the maximum absorption for Direct Red 80. After the first reading, 0.14g of the hydrotalcite sample was added. Samples were then withdrawn at 5, 10 and 20 minute intervals. The results were calculated as absorbance ratio, $A_t$ where:-

$$A_t = \frac{\text{Absorbance at time } t}{\text{Initial Absorbance}}$$

where:-

$t = 5$, 10 or 20 minutes

A low value of $A_t$ indicates higher amounts of dye absorbed on to the hydrotalcite containing sample.

The results are given in Table I.

Table I                             Absorbance ratio

| Examples | | | | $A_5$ | $A_{10}$ | $A_{20}$ |
|---|---|---|---|---|---|---|
| III | Mg Al hydrotalcite | } | 25°C | 0.347 | 0.281 | 0.215 |
| | Particle size 50-75$\mu$m | } | 40°C | 0.323 | 0.311 | 0.264 |
| II | Mg Al hydrotalcite | } | | | | |
| | silica composite | } | 25°C | 0.114 | 0.078 | 0.011 |
| | Particle size 56-80$\mu$m | } | 40°C | 0.049 | 0.024 | 0.004 |
| IV | Zn Al hydrotalcite | } | 25°C | 0.449 | 0.230 | 0.092 |
| | Particle size 50-75$\mu$m | } | 40°C | 0.224 | 0.103 | 0.064 |
| I | Zn Al hydrotalcite- | } | | | | |
| | silica composite | } | 25°C | 0.199 | 0.083 | 0.071 |
| | Particle size 56-80$\mu$m | } | 40°C | 0.075 | 0.055 | 0.040 |

The results clearly show that on a weight for weight basis the HT/silica composite removes dye from solution more rapidly than the pure HT (hydrotalcite-like) material for comparable particle size fractions. These results are somewhat surprising as the HT/silica composite contains 75% less HT than the pure material.

Electron microscopy showed that the HT/silica composite does not contain discrete silica particles covered in HT, but rather several silica particles held together by a HT "glue".

It will be seen that the examples quote size ranges which are not exactly coextensive. However, this difference is small and it is seen that the composite particles, which provide better results, have the higher size range. The applicants have found hydrotalcite-like materials of grain size less than 11.0 nm (110 Angstrom) can absorb colorants at a faster rate than materials with a grain size greater than 11.0 nm (110 Angstroms). These finer grain size materials also have a greater absorbant capacity. Preferably the grain size is less than 10.0 nm (100 Angstrom), more preferably between 4 and 10 nm (40 and 100 Angstrom). These grain sizes are measured in the <001> direction by X-ray diffraction. Methods A and B are routes to obtaining this finer grain size material.

Method A

A magnesium/aluminium hydrotalcite-like material of finer grain size useful in the present invention when deposited on a matrix may be prepared as follows:

An alkali solution comprising 150 litres of a mixed sodium hydroxide/sodium carbonate alkali solution and having a total anion concentration of 5M and a hydroxide to carbonate molar ratio of 3:1, was added to a vessel containing around 66 litres of demineralised water to raise the pH from neutral to around pH 10.

A solution of aluminium sulphate and magnesium sulphate having a total metal ion concentration of 2M and a magnesium to aluminium molar ratio of 3:1, was added to the vessel and the vessel contents were agitated. The rate of addition of the sulphate solution was adjusted to maintain a pH in the solution of 10 to 10.5. Immediate precipitation occurred on addition of the sulphate solution however the resulting slurry was cooled to maintain a temperature of 25°C. The reaction time was approximated 50 minutes, plus 10 minutes agitation once addition of the solutions was complete. The slurry was then pressed to form a filter cake and the cake was washed with demineralised water. The wash filtrate was tested for the presence of sulphate anion using barium chloride solution, which indicated that most of the sulphate had been removed from the cake. The cake was then air dried for 1 hour and then passed through a ring drier and then milled in a fluid energy mill to a particle size of 5 to 7 microns.

## Method B

A magnesium/aluminium hydrotalcite-like material of finer grain size useful in the present invention when deposited on a matrix may be prepared in the following way.

To 98 litres of water 19.5 kg of sodium hydroxide was added followed by 25kg of magnesium nitrate and 18.3kg of aluminium nitrate dissolved in 73 litres of water to give a Mg:Al molar ratio of 3:1. The nitrate solution was added over a period of 30 minutes with stirring. The resulting precipitate was filtered, washed and oven dried at approximately 120°C and micronised using a fluid energy mill.

The following Examples illustrate the preparation of these finer grain size materials.

## Example V

A sample of Mg/Al hydrotalcite was prepared as in method A above. The grain size of this material was measured by X-ray powder diffraction using a Philips series 17 diffractometer and Cuk $\alpha$ radiation. The (001) reflection peak was converted into full-width-at-half-maximum values using either

$$FWHM_L = \frac{2.00}{B}$$

or

$$FWHM_{SQL} = \frac{1.29}{B}$$

by measuring the breadth (B) and fitting these to either lorentzian or squared-lorentzian profiles. The peak position and FWHM values are inserted into the Scherrer equation described in EF Kaelbu, Handbook of X-rays, McGraw-Hill, (1967) from which the grain size can be calculated.

The rate of colorant absorption of this hydrotalcite was compared to a commercially available Mg/Al hydrotalcite sold under the trade name KYOWA SHT-4A ex Kyowa by measuring the absorbance of filtered samples of liquid, as compared to a blank, at timed intervals. The rate of absorption was then expressed as an absorbance ratio.

$$\text{absorbance ratio} = \frac{\text{absorbance at time } t = t}{\text{absorbance at time } t = 0}$$

The lower the absorbance ratio, the faster the rate of colorant absorption by the hydrotalcite-like material.

A solution in demineralised water of lg/l nonionic surfactant (Synperonic A7 (ex ICI)), 0.01 mol dm$^{-3}$ sodium chloride and 0.01 g/l dyestuff (Direct Red 80: CI 35780) was prepared. 200ml of the solution was placed in a water bath and maintained at a temperature of 25°C. The solution was stirred at all times. 5ml samples were withdrawn at timed intervals and filtered through a 0.45$\mu$m Millipore filter. The absorbance of each sample was determined against a water/nonionic/NaCl standard at 525nm as measured on a UV/visible spectronometer this being the maximum absorption for Direct Red 80. After the first reading 0.14g of Mg/Al hydrotalcite according to the invention was added. Samples were then withdrawn at 1 minute intervals. This procedure was repeated with KYOWA SHT-4A.

| Material | Grain Size nm (Å) | Particle Size µm | Absorbance Ratio at 525 nm | | | | |
|---|---|---|---|---|---|---|---|
| | | | t=60s | t=120s | t=180s | t=240s | t=300s |
| Mg/Al Hydrotalcite | 5.3 (53) | 5-7 | 0.009 | 0.000 | 0.000 | 0.000 | 0.000 |
| KYOWA SHT-4A | 37.3 (373) | 5-7 | 0.856 | 0.761 | 0.635 | 0.561 | 0.461 |

These results show that a hydrotalcite-like material of grain size less than 11 nm (110 Angstroms) has a faster rate of colorant absorption than a commercially available hydrotalcite.

Example VI

The rate of colorant absorption of a Mg/Al hydrotalcite material prepared as in method B above was compared to that of a material prepared as in method B excepting that the solution was aged by heating at 90°C to 100°C for 2 hours before being filtered, by measuring the absorbance ratio as described in Example V.
The grain size of both materials was measured by the method described in Example V.

| Material | Grain Size (Å) | Particle Size μm | Absorbance Ratio at 525 nm | | | |
| --- | --- | --- | --- | --- | --- | --- |
| | | | t-60s | t=120s | t=180s | t=240s |
| Mg/Al Hydrotalcite Method B | 8.7 (87) | 56-100 | 0.065 | 0.021 | 0.010 | 0.003 |
| Mg/Al Hydrotalcite Method B and Aged | 25.0 (250) | 56-100 | 0.990 | 0.911 | 0.797 | 0.743 |

These results show that a hydrotalcite-like material of grain size less than 11nm (110 Angstroms). has a faster rate of colorant absorption than a hydrotalcite-like material of grain size 25 nm (250) Angstroms.

Example VII

The rate of colorant absorption of a Mg/Al hydrotalcite-like material according to the invention and prepared as in method A above was compared to that of a Mg/Al hydrotalcite-like material prepared as in method B above excepting that the solution was aged by heating at 90°C to 100°C for 2 hours before being filtered, by measuring the absorbance ratio as described in Example V.
The grain size of both materials was measured by the method described in Example V.

| Material | Grain Size nm (Angstroms) | Particle Size Microns | Absorbance Ratio | | |
|---|---|---|---|---|---|
| | | | t=30s | t=60s | t=90s |
| Mg/Al Hydrotalcite Method A | 5.3 (53) | 5-7 | 0.128 | 0.018 | 0.004 |
| Mg/Al Hydrotalcite Method B and Aged | 25 (250) | 5-7 | 0.188 | 0.018 | 0.018 |

These results show that a hydrotalcite-like material of grain size less than 11 nm (110 Angstroms) has a faster rate of colorant absorption than a hydrotalcite-like material of grain size 25 nm (250 Angstroms).

Example VIII

The colorant binding capacity of a Mg/Al hydrotalcite-like material according to the invention and prepared as in method A above was compared to that of a Mg/Al hydrotalcite-like material prepared as in method B above excepting that the solution was aged by heating at 90°C to 100°C for 2 hours before being filtered.

Colorant binding capacities were measured by adding 200ml of a solution of 0.1g of dyestuff in 1 litre of water to a flask containing 1 litre of water. 0.06g of the hydrotalcite sample was then added to the flask which was shaken vigorously for 2 minutes and left to stand for 2 hours with shaking every 15 minutes. The solution was then filtered and its absorbancy measured (as described in Example V) and compared to an identical solution with hydrotalcite omitted. The binding capacity was then calculated from the difference between these absorbancies and expressed as a percentage weight for weight.

| Dyestuff | max nm | Binding Capacity % w/w | |
|---|---|---|---|
| | | Mg/Al Hydrotalcite method A Grain size 5.3 nm (53Å) | Mg/Al Hydrotalcite method B and Aged. Grain size 25 nm (250Å) |
| Procion Turqoise HA ex ICI | 670 | 22 | 12 |
| Neutrichrome Navy S-B ex ICI | 580 | 20 | 4 |
| Levafix Brilliant Red E-4BA ex Bayer | 535 | 17 | 7 |
| Irqalan Grey BRL 200% ex Ciba-Geigy | 570 | 15 | 0 |
| Acidol Black M-SRL ex BASF | 575 | 24 | 12 |

These results show that a hydrotalcite-like material of grain size less than 11 nm (110 Angstroms) according to the invention has a greater dye binding capaacity than a hydrotalcite-like material of grain size 25 nm (250 Angstroms).

The finer grain size materials prepared by methods A and B and Examples V to VIII inclusive provide efficient absorption when deposited in situ on a matrix material.

Example IX

This and the following examples illustrate the formation in situ of hydrotalcite in the channels or pores of porous materials.

Two solutions were made up:

Solution 1 88.2g $MgSO_4$ $7H_2O$
     39.4g $Al_2(SO_4)_3$ $16H_2O$
     200g water
Solution 2 30g NaOH
     26.5g $Na_2CO_3$
     200g water

Into solution 1 a cordierite monolith, ex Corning Keramik (material 9475, Product code 831615), cut down to 2cm height and 1cm diameter, was immersed for 10 secs, then removed and surplus solution allowed to drain. Whilst still wet, it was then immersed into solution 2, for 10 secs, removed, washed with water and oven dried (120°C). 0.053g HT was deposited on the monolith.

The rate of colorant uptake was measured by holding the monolith in the centre of a 10cm length of plastic tubing of a suitable size to prevent dye solution passing around the outside of it. The bottom of the tube was constricted so that when the dye solution was circulating there was a head of solution maintained above the monolith. 75.7g of Direct Red 80 dye solution (from the standard kinetics test described on page 14) was recirculated at 25°C through the coated monolith. This proportion of HT:dye was the same as that in the kinetics test used for the other examples. After 5 minutes circulation a sample of solution was taken and analysed. The absorbance ratio after t=5 mins was 0.130

This example shows that HT can be coated in situ onto the walls of a monolith, and used to remove colour from a solution flowing through the monolith.

Example X

9.5g of oven dried (120°C) sulphonated polystyrene microporous material (prepared using the procedure in Example 11 of EPA 0105634) was placed in a 500ml beaker to act as matrix. 100cm³ of a solution containing lllg magnesium sulphate ($MgSO_4$ $7H_2O$), 47g Aluminium sulphate ($Al_2(SO_4)_3$ $16H_2O$) and 300g water, was added dropwise evenly over the microporous material. Next 100cm³ of a solution containing 45g sodium hydroxide (NaOH), 40g sodium carbonate ($Na_2CO_3$) and 300g water was added in the same manner. The sorptive capacity of the microporous material is such that there was no excess aqueous phase, i.e. the precipitation occurred within the pores of the microporous material.

The coated microporous material was washed, by adding 2dm³ water and filtering, then oven dried (120°C). The dry product weighed 18.8g. The dye uptake kinetics were measured on a weight of HT basis, and compared with solid hydrotalcite of the same size (300μm - Malvern) made as previous Method A.

|  | t=20sec | t=40sec | t=1min | t=2min | t=5min |
|---|---|---|---|---|---|
| HT/matrix | 0.592 | 0.537 | 0.396 | 0.305 | 0.047 |
| HT | 0.893 | 0.861 | 0.853 | 0.804 | 0.772 |

This example shows that a hydrotalcite formed in situ in the pores of a microporous material is capable of removing suspended dye at a faster rate than a HT prepared by a similar method but in the absence of a microporous material.

Example XI

Neosyl ET/Hydrotalcite composites were prepared as follows.
Two standard solutions were prepared:-
1.  2 mol $dm^{-3}$ metals solution
    i.e. 1.5 mol $dm^{-3}$ $MgSO_4$. $7H_2O$
        0.25 mol $dm^{-3}$ $Al_2(SO_4)_3$. $16H_2O$
2.  5 mol $dm^{-3}$ alkali solution
    75% NaOH
    25% $Na_2CO_3$
About 10 Litre of each solution was prepared.
Standard preparation used was:-
    i. 1 litre demineralised water was charged into a 5 litre beaker.
    ii. The two standard solutions of metal salts and alkali are added to this simultaneously from two separate dropping funnels. The pH is maintained at 10.5 - 11.0 by adjusting the relative addition rates of these two solutions.
    iii. Exactly one litre of metals solution added. This required just over 1 litre of alkali to maintain pH as above. This volume of metals solution precipitates 150g of HT.
    iv. Total time for the addition was 45 minutes. The solution was then further stirred for 15 minutes to ensure complete reaction.
    v. The resulting slurry was filtered, washed with 10 litres of demin water and dried at 100°C an oven overnight.
    vi. The dried sample was then milled by hand in a mortar and pestle and sieved to give a fraction with a 53-75μm particle size.
The above procedure was used to prepare a control material i.e. 100% Hydrotalcite.

To prepare the composite materials, Neosyl ET (a precipitated silica ex- Crosfield, Warrington, England) was mixed with 2 litres of water as the initial charge in the 5 litre beaker and then the metal salt and alkali solutions were added to this as for the control preparation described above. (The additional litre of water in the 5 litre beaker in the initial charge is to ensure good dispersion of the silica during the hydrotalcite precipitation and thence product homogeneity).

| % by weight in final composite | | Mass of HT $ppt^n$/g | Mass of silica charged to 5 litre vessel/g |
|---|---|---|---|
| silica | HT | | |
| 0 | 100 | 150 | 0 |
| 90 | 10 | 150 | 1350 |
| 80 | 20 | 150 | 600 |
| 70 | 30 | 150 | 350 |
| 60 | 40 | 150 | 225 |
| 50 | 50 | 150 | 150 |

All samples were dried in oven an at 100°C overnight. All were milled in a mortar and pestle and sieved to give a 53-75μm fraction.

The rate of colorant absorption and the colorant binding capacities of the above materials were obtained using the previously described standard test methods on page 14 and 17 respectively. All rate of colorant absorption data is presented as absorbance ratios i.e.

$$\text{Absorbance ratio} = \frac{\text{Absorbance at time } t}{\text{Initial absorbance}}$$

Rate of colorant absorption (using Direct Red 80)

| | Time | | | | | |
|---|---|---|---|---|---|---|
| | 30 secs | 60 secs | 90 secs | 120 secs | 180 secs | 240 secs |
| Pure 100% HT | 0.810 | 0.770 | 0.738 | 0.690 | 0.595 | 0.655 |
| 90:10 composite | 0.980 | 0.853 | 0.825 | 0.801 | 0.782 | 0.758 |
| 80:20 composite | 0.349 | 0.315 | 0.207 | 0.187 | 0.129 | 0.095 |
| 70:30 composite | 0.311 | 0.216 | 0.137 | 0.104 | 0.053 | 0.025 |
| 60:40 composite | 0.382 | 0.220 | 0.166 | 0.104 | 0.091 | 0.046 |
| 50:50 composite | 0.373 | 0.224 | 0.166 | 0.128 | 0.066 | 0.066 |

With the exception of the 90:10 composite all others show faster kinetics than the 100% HT sample, despite having significantly less HT in the composite. This illustrates how more efficient use is made of the sorbent when it is formed as a composite with silica.

Example XII

Hydrotalcite/zeolite composites were prepared as follows.
Two zeolite composites consisting of 50% HT:50% zeolite (by weight) were prepared using the method of Example XI. The zeolites used as matrix were sodium Y and zeolite 4A, respectively, obtainable from Crosfield, Warrington, England.

Colorant binding capacities (using Procion Turquoise HA, obtainable from ICI, England) were as follows:

|  | % dye bound by weight |
|---|---|
| 100% pure HT | 3.64 |
| HT/NaY composite | 4.65 |
| HT/4A composite | 10.8 |

Rates of colorant absorption were as follows:

|  | Time | | | | | |
|---|---|---|---|---|---|---|
|  | 30 secs | 60 secs | 90 secs | 120 secs | 180 secs | 240 secs |
| Pure 100% HT | 0.810 | 0.770 | 0.738 | 0.690 | 0.595 | 0.655 |
| HT/NaY composite | 0.893 | 0.924 | 0.924 | 0.917 | 0.924 | 0.921 |
| HT/4A composite | 0.520 | 0.385 | 0.309 | 0.266 | 0.213 | 0.169 |

## Claims

1. A method of preparing a composite material in which a hydrotalcite-like material is provided with improved absorption properties, by forming the hydrotalcite-like material in an aqueous medium in the presence of a matrix material on which it is deposited.

2. A method according to claim 1 wherein the matrix is capable of providing a function complementary to the absorption properties of the hydrotalcite-like material.

3. A composite material comprising a hydrotalcite-like material formed in situ and deposited on a matrix material.

4. A composite material according to claim 3 wherein the hydrotalcite-like material is present in a weight ratio of 10:90 to 90:10 with respect to the matrix material.

## Patentansprüche

1. Verfahren zur Herstellung eines Verbundmaterials, bei dem ein hydrotalcitartiges Material mit verbesserten Absorptionseigenschaften erhalten wird, indem man das hydrotalcitartige Material in einem wäßrigen Medium in Gegenwart eines Matrixmaterials, auf dem es abgeschieden wird, bildet.

2. Verfahren nach Anspruch 1, bei dem die Matrix fähig ist, eine zu den Absorptionseigenschaften des hydrotalcitartigen Materials komplementäre Funktion beizusteuern.

3. Verbundmaterial, umfassend ein hydrotalcitartiges Material, das in situ gebildet und auf einem Matrixmaterial abgeschieden ist.

4.    Verbundmaterial nach Anspruch 3, in welchem das hydrotalcitartige Material in einem Gewichtsverhältnis von 10:90 bis 90:10, bezogen auf das Matrixmaterial, vorliegt.

**Revendications**

1.    Procédé de préparation d'un matériau composite dans lequel on fournit un matériau de type hydrotalcite ayant des propriétés améliorées d'absorption , grâce à la formation du matériau de type hydrotalcite dans un milieu aqueux en présence d'un matériau constitutif de matrice sur lequel il est déposé.

2.    Procédé selon la revendication 1, dans lequel la matrice est capable d'offrir une fonction complémentaire aux propriétés d'absorption du matériau de type hydrotalcite.

3.    Matériau composite comprenant un matériau de type hydrotalcite formé in situ et déposé sur un matériau constitutif de matrice.

4.    Matériau composite selon la revendication 3, dans lequel le matériau de type hydrotalcite est présent dans un rapport pondéral de 10:90 à 90:10 par rapport au matériau constitutif de matrice.